# EUROPEAN PATENT SPECIFICATION

(11) **EP 1 202 525 B1**
(45) Date of publication and mention of the grant of the patent: **29.03.2006**
(21) Application number: 01124385.4
(22) Date of filing: 24.10.2001
(51) Int. Cl.: H04L 29/06, H04L 12/28

(54) **Remote control device for network devices**
Fernsteuervorrichtung für Netzwerkgeräte
Dispositif de télécommande pour appareils de réseau

(30) Priority: 25.10.2000 US 696155
(43) Date of publication of application: 02.05.2002
(73) Proprietor: SUN MICROSYSTEMS, INC., Palo Alto, California 94303 (US)
(72) Inventor: St. Pierre, Robert P., Sunnyvale, California 94087 (US); Koch, Mark J., Westminster, Colorado 80021 (US)
(74) Representative: Frohwitter, Bernhard

(56) References cited:
- EP-A- 0 793 355
- WO-A-99/06910
- US-A- 5 555 502
- GUTTMAN E ET AL: "Service Location Protocol, Version 2" NETWORK WORKING GROUP, RFC 2608, June 1999 (1999-06), XP002191158
- PASKINS A.: 'The IEEE 1394 bus' CONFERENCE PROCEEDINGS ARTICLE 12 May 1997, pages 4-1 - 4-6, XP006510254

## Description

### Technical Field

The present invention relates generally to the control of devices connected to a network, and more particularly to a remote control device executing a protocol which enables dynamic location, identification and control of network connected devices.

### Background of the Invention

Remote controls ( "remotes" ) are often used to control consumer electronic devices. Conventional remotes are usually handheld devices on which a user interacts with an electronic device by pressing buttons. In addition to their buttons, some remotes may have a limited LED display which is used to display user choices. Some remotes are dedicated to a single device, whereas other remotes may be used to control more than one device. Remotes which are used to control more than one device are often referred to as "all in one" or "multi-remotes." Devices which are traditionally controlled by such remotes include televisions, VCR's, stereo receivers, CD players, and other similar devices.

Conventional remotes function by sending a command code encoded in an infrared ( IR ) signal to an electronic device. The command code causes the device to execute the operation called for by the command code. For example, a remote control might be used to send an "off" command to a television set. Each device receiving the signal from the remote has its own unique set of command codes. Conventional remotes have to be manually programmed for each separate device a user seeks to control. Typically this is done by instructing a user to enter a device code ( such as "146") by pressing numbers on the keypad of the remote. The device code serves as a index into a code table which has been pre-programmed into the remote. The code table identifies the proper commands for the associated device. A user of the remote control can then use the remote to control the device whose codes the remote has identified.

Conventional remotes have some deficiencies. First, the remotes do not readily accommodate new devices. The table of codes inside the remote which the remote uses to access the actual command codes for a device are pre-programmed. Accordingly, if a device was invented after the date the codes were programmed into the remote, the codes will not be present inside the remote when the remote seeks to retrieve them. Additionally, the majority of remotes are "line of sight" remotes that require close proximity with no obstacles present between the remote and the device. The IR signals must be able to travel from the remote to the device without interruption in order to be effective. Additionally, the majority of remotes are restricted to controlling consumer electronic devices for which the remotes are programmed with code tables in advance. Because the remotes do not learn the command codes dynamically, the remote is restricted to someone else's choice of devices.

Document WO 99/06910 describes a method and apparatus for including self-describing information within devices. The information is embedded within a ROM within the device and is read by other devices coupled to the device.

Document EP-A-0 793 355 describes a method of controlling remote control electronic apparatus coupled to a network and a remote control electronic apparatus to be coupled to a network. Each remote control apparatus has a ROM including a local control program and which is transmitted on request to a controlling apparatus. The transmitted control program is used to generate an operation control signal.

### Summary of the Invention

The present invention provides a remote control device apparatus according to claim 1. Preferred aspects of the invention are provided according to the dependant claims.

The present invention addresses difficulties faced by the user of a remote control device in controlling other network connected devices, especially other newly connected devices. A network protocol, hereafter the NetCTL protocol, enables a remote control device to dynamically learn the command codes of a recently connected network device if that device is also executing the NetCTL protocol. The dynamic learning process which results from the NetCTL protocol does not require the intervention of either a system administrator or the user of the remote control. The remote "learning" process happens automatically. This dynamic learning process enables the remote control to "learn" the command codes for the network connected device even if the network device is a recent invention. Once the remote control has "learned" the command codes for a network device, the remote can be used to control the network connected device by sending the device commands encoded in the NetCTL format.

In accordance with one embodiment of the present invention, a remote control device possessing a network interface and executing a network protocol ( i.e., the NetCTL protocol ), dynamically locates and identifies, other electronic devices connected to the network which are also executing the same protocol, dynamically retrieves those command codes for the other network connected device and controls the network connected device through the use of those command codes. The network connected devices whose commands are capable of being learned by the remote control device can take many forms such as kitchen appliances, stereo equipment, computer equipment, etc. Any electronic device which uses command codes an is connected to the network and executing the NetCTL protocol can be controlled by the remote control device. The remote control includes a display surface, buttons, either of a physical or virtual nature, the aforesaid network interface, dynamic memory to retain the command codes of the network devices and the code for the NetCTL protocol, and a CPU to execute the NetCTL protocol.

In accordance with another embodiment of the current invention, the remote control device is connected to a network environment located in a motor vehicle, and a method is practiced whereby the remote dynamically learns the command codes of devices connected to the motor vehicle network. Any electronic device connected to the motor vehicle network that uses command codes and is executing the NetCTL protocol can be located, identified and controlled by the remote.

### Brief Description Of The Drawings

Figure 1 is a block diagram showing an illustrative embodiment of the present invention;
Figure 2A is a block diagram showing an alternative embodiment of the present invention which includes a network that is located in a motor vehicle;
Figure 2B is an alternate depiction of the network connected devices in the motor vehicle network of Figure 2A;
Figure 3A is a block diagram depicting a remote control device of the illustrated embodiment with a graphical user interface for buttons;
Figure 3B is a block diagram depicting a remote control device of the illustrated embodiment with physical buttons;
Figure 4A is a block diagram illustrating the sequence of messages between a remote and a network connected device occurring in one aspect of the illustrated embodiment of Figure 1 that does not use a Directory Agent of the Service Location Protocol;
Figure 4B is a block diagram illustrating the sequence of messages between a remote, an SLP Directory Agent, and a network connected device, occurring in an alternative aspect of the illustrated embodiment of Figure 1 that does use a Directory Agent of the Service Location Protocol;
Figure 5 is a block diagram showing the frame format of the header for client side messages used in the illustrated embodiment of Figure 1;
Figure 6A is a flow chart of the sequence of messages in the illustrative embodiment of Figure 1 during a Hello request and response;
Figure 6B is a block diagram showing the frame format used in the body of the Hello Request and the Hello Response of Figure 6;
Figure 7A is a flow chart of the sequence of messages in the illustrative embodiment of Figure 1 during a List Commands request and response;
Figure 7B is a block diagram showing the frame format used in the body of the List Commands Request and the List Commands Response of Figure 7;
Figure 8A is a flow chart of the sequence of messages in the illustrative embodiment of Figure 1 during a Do Command request and response;
Figure 8B is a block diagram showing the frame format used in the body of the Do Request and the Do Response of Figure 8;
Figure 9A is a flow chart of the sequence of messages in the illustrative embodiment of Figure 1 during a Goodbye Command request and response;
Figure 9B is a block diagram showing the frame format used in the body of the Goodbye Request and the Goodbye Response of Figure 9;
Figure 10A is a flow chart of the sequence of messages in the illustrative embodiment of Figure 1 during a Get Image Command request and response;
Figure 10B is a block diagram showing the frame format used in the body of the Get Image Request and the Get Image Response of Figure 10;
Figure 11A is a flow chart of the sequence of messages in the illustrative embodiment of Figure 1 during a Get Text Command request and response;
Figure 11B is a block diagram showing the frame format used in the body of the Get Text Request and the Get Text Response of Figure 11;
Figure 12A is a flow chart of the sequence of messages in the illustrative embodiment of Figure 1 during a Get Layout Help Command request and response;
Figure 12B is a block diagram showing the frame format used in the body of the Get Layout Help Request and the Get Layout Help Response of Figure 12.

### Detailed Description Of The Invention

The illustrative embodiment of the present invention employs a remote control device executing a protocol ( i.e. the NetCTL protocol ) which facilitates a remote control device locating other network connected devices. The protocol also enables a remote to dynamically learn command codes for network connected devices and then use those command codes to control the network connected devices. The set of device types that can be controlled by the remote control device is not statically fixed and is limited only by the number of devices on the network executing the protocol and hardware limitations of the remote control device. The remote control is not limited to interacting with consumer electronic devices whose command codes have been pre-programmed into the remote.

The protocol is designed to be used in a network, such as a computer network that supports the TCP/IP protocol suite. Because protocol communications are carried over the network, there is no need for the remote control device to be in physical proximity or "line of sight" with the controlled device. In fact, the remote control device's network interface can be either a physical interface or a wireless interface. Moreover, the types of devices that may be controlled by the remote control device includes devices that are not typically controlled by an Infrared remote control device.

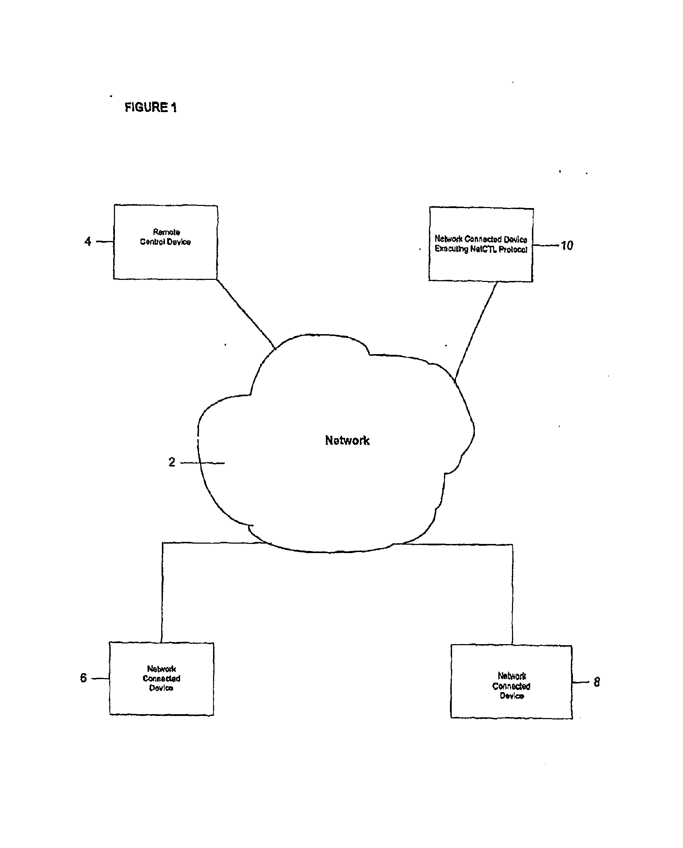

Figure 1 depicts an environment suitable for practicing an illustrative embodiment of the present invention. The environment includes a network 2 to which devices 4, 6, 8, 10 are interfaced. The devices include a remote control device 4 that supports the NetCTL protocol. The devices also include network connected devices 6 and 8 that do not support the NetCTL protocol ( and network connected device 10 that supports the NetCTL protocol ). The remote control device 4 may control all of the connected network devices 6, 8 and 10, even the devices 6 and 8 that do not support the protocol. It is presumed that the remote control device 4 is already aware of the network connected devices 6 and 8 but is not yet aware of network connected device 10 in the depiction of Figure 1.

The illustrative embodiment of the present invention depicted in Figure 1 facilitates multiple network connected devices 10 being identified by the remote control device 4. After identification of the network connected device 10, the remote control device 4 dynamically learns the command codes of the identified network connected device through a sequence of protocol defined request and response messages. Once the remote control device 4 has received the codes for the network connected device 10, a user of the remote control device is able to select a device from among those devices that have been identified, and issue commands to that network connected device.

Those skilled in the art will recognize that the components shown in Figure 1 are intended for illustration purposes only and are in no way meant to be limiting. The present invention may be practiced on networks having different topologies and possessing different network devices. The network may be an Internet protocol (IP) based network capable of sending and routing packets over the Internet. If the network is an IP based network, both the remote control device and any network connected devices executing the NetCTL protocol will also use the Service Location Protocol ( SLP ) as part of the device identification/registration process.

The Service Location Protocol ( SLP ) is a protocol established by the Internet Engineering Task Force ( IETF ) that simplifies the discovery of network resources. The protocol utilizes the concept of User Agents, Service Agents and Directory Agents. Applications running on a computer are represented by User Agents which understand the service and resource needs of the application. In the case of the present invention, the remote control device is represented by a User Agent. Each network device is represented by a Service Agent. Some networks have Directory Agents. The Service Agent sends out a multicast request for any Directory Agents on the network to make contact. If any Directory Agents respond, the Service Agent sends a registration unicast to each responding Directory Agent. The registration unicast includes the type of device the Service Agent is representing, the device's attributes, and the device's Uniform Resource Locator ( URL ) address. An attribute is a characteristic that can be used to distinguish one device from another. For example an attribute for a printer is color capability. Another attribute for the printer is its location. When a User Agent needs a particular service, it sends out a service request which includes both the type of service and attributes desired. If the network possesses a Directory Agent, the Directory Agent responds with a list of eligible devices and the devices Uniform Resource Locator ( URL ) address. If there is no Directory Agent on the network, the User Agent multicasts its service request on the network and the Service Agents for devices whose attributes match those requested respond directly to the User Agent.

In one embodiment of the present invention, the network is an Internet Protocol ( IP ) based network and the Service Location Protocol ( SLP ) is utilized to locate and identify available network attached devices, such as the network attached device 10. The NetCTL protocol utilizes the SLP in one of two ways depending on the configuration of the network 2. Upon being initially attached to the network, the Service Agent for a device executing the NetCTL protocol 10 multicasts a request for any available Directory Agents to contact the Service Agent. The Service Agent then unicasts a "registration" message to each responding Directory Agent. The registration message includes a text string identifying the name of the network attached device 10, the device's attributes, and the URL address giving the device's location on the network 2. The Directory Agent will subsequently forward this information to the remote control device 4 when the User Agent for the remote control device sends out a multicast request for a list of available network devices. If the network 2 does not have a Directory Agent, the User Agent for the remote control device 4 sends a multicast request out on the network directing Service Agents which represent devices which possess certain attributes to contact the User Agent. Regardless of which method is used, once the remote control device 4 receives the information for a device it wishes to contact, it can do so directly by sending messages to the device's URL address.

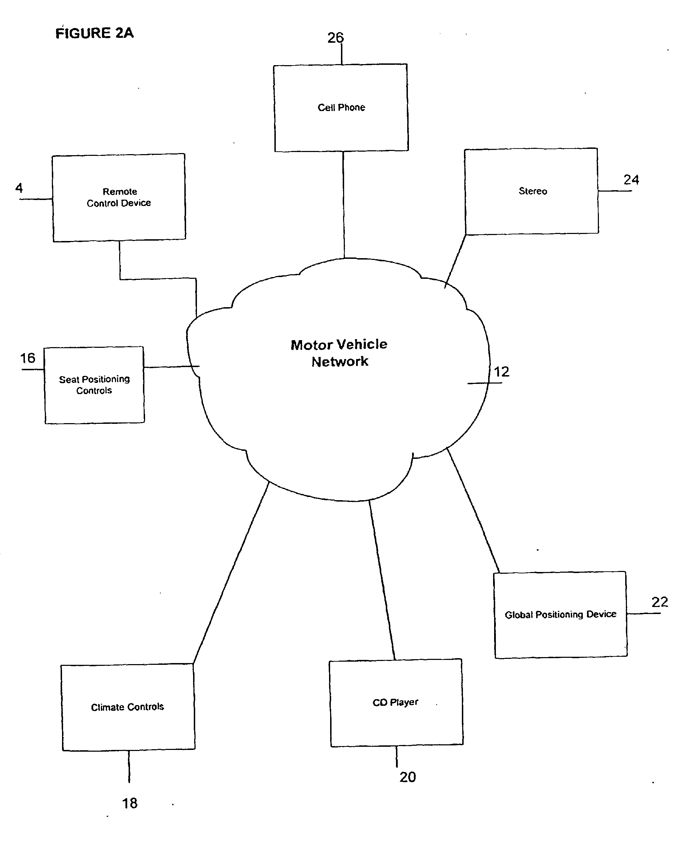

Figure 2A depicts an alternative embodiment of the present invention where the remote control device 4 is used in an automobile. The network environment shown includes a motor vehicle network 12 to which Seat Positioning Controls 16, Climate Controls 18 ( heating and air conditioning ), CD player 20, and Global Positioning Device 22 ( used to provide mapping operations for the driver ) are connected to the network. A stereo 24 and cellular phone 26 are also connected to the network. The remote control device is capable of controlling all of the components 16, 18, 20, 22, 24, and 26 by sending communications over the internal car network 12.

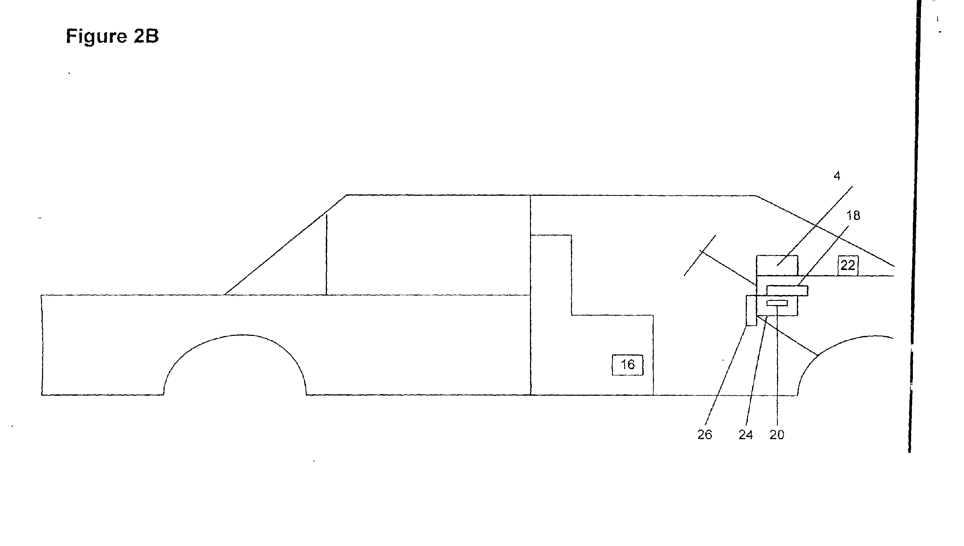

Figure 2B depicts the network of Figure 2A where the remote control device 4 is affixed to the dashboard of a car and the network is a network of devices within the car. The remote control device is able to control the seat positioning controls 16, climate controls 18, cd player 20, global positioning device 22, stereo 24, and cell phone 26. The devices in the car network may be physically connected to the network, or connected via a wireless network interface. The operator of the motor vehicle uses the centrally located remote control device 4 to control the other network connected devices.

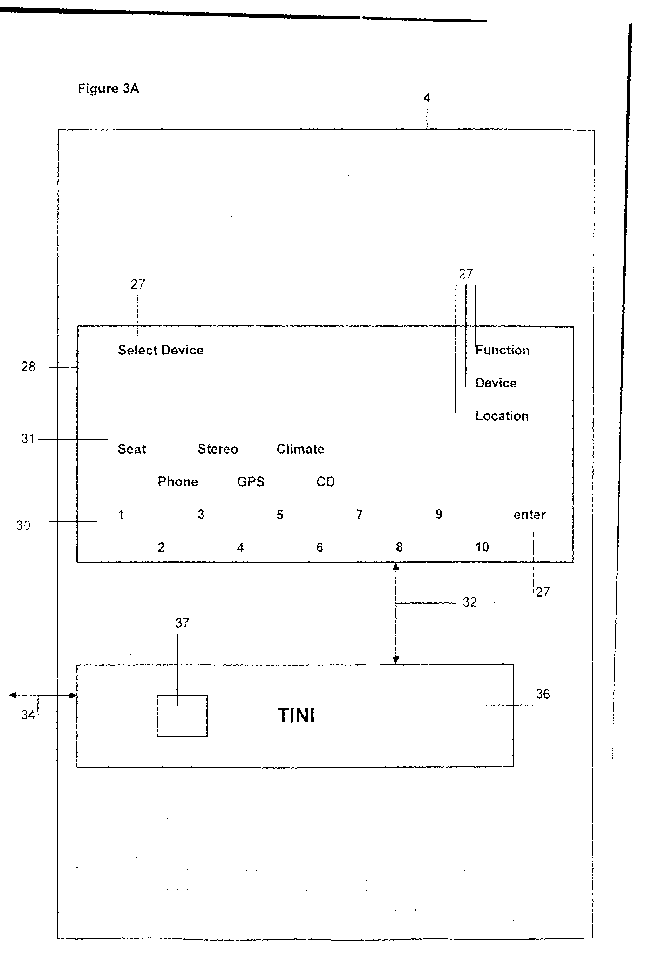

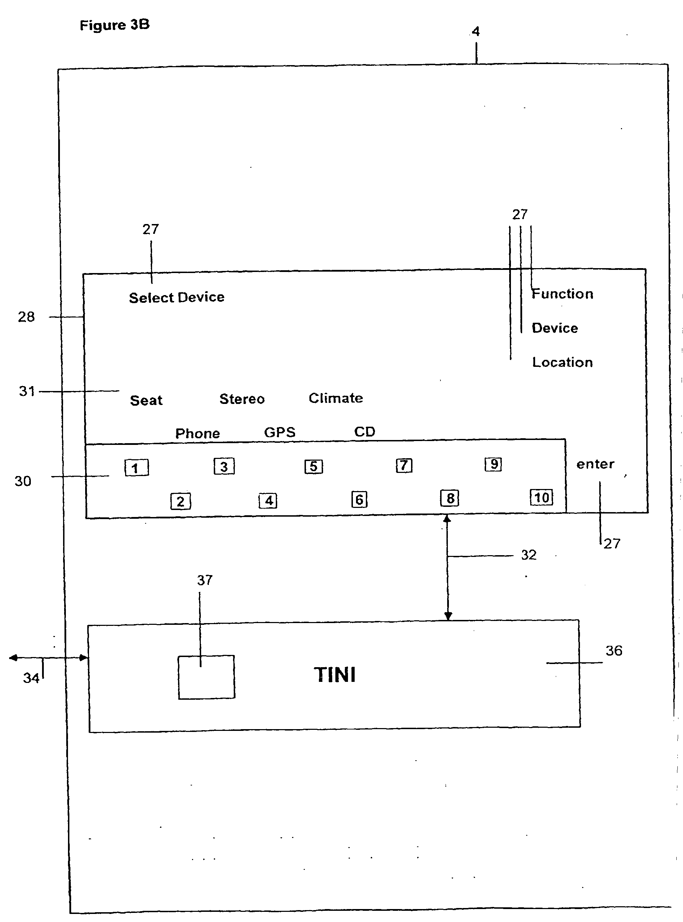

Figure 3A depicts in more detail, an example of the remote control device 4 of the present invention. The remote control device 4 includes, a touch screen display surface 28 upon which are displayed labels relating to the selection of network connected devices 27. A graphical user interface ( GUI) 30 is shown on the touch screen display surface 28. The GUI includes numbers 1-10 that may be depressed by a user to make a selection. The GUI also depicts the names 31 of the network connected devices that can be controlled by the remote control device 4( e.g. "seat", "phone", etc. ). Each network connected device name 31 appearing on the display surface 28 corresponds to a graphical user interface simulating a button 30. For example, in Figure 3, "Seat" corresponds with button "1". A user selects a particular device by touching the appropriate button and a request is sent to the selected device. The remote control device 4 includes a TINI board 36 ( provided by Dallas Semiconductor, Inc. ) with a serial port 32 and a network interface 34. The TINI board 36 contains a processor 37 for executing instructions. The depression of a button sends a signal to the TINI 36 which then sends a NetCTL protocol request to the selected device by way of the network interface 34.

The images depicted on the touch screen display surface 28 will vary according to the stage of communication between the electronic remote control device 4 and network connected devices. Thus after the user selects one of the network connected devices, a new screen may be shown to provide the user with appropriate choices.

A practitioner of the art will recognize that the physical composition of the remote control device 4 can take many different forms. For example the display surface can be a regular computer monitor screen rather than a touch screen and the simulated buttons may be replaced by mouse buttons or keyboard keys rather than through the use of a touch screen. Alternatively, the buttons can be physical buttons next to the display surface which a user would manually depress. Figure 3B depicts a remote control device containing physical buttons instead of the graphical user interface used to simulate buttons that is depicted in Figure 3A. Additional embodiments of the invention are also possible. The remote control device 4 may be handheld or a much larger device than will comfortably in someone's hand. However, regardless of the physical dimensions of the remote control device 4 or the physical makeup of the buttons 30 on the remote, the protocol executed by the remote functions identically in handling communications with the network connected devices.

When the user of the remote control device 4 selects the device that they are interested in by pressing/clicking on the button 30 associated with the name of a device on the network, the button being either physical or virtual, a request for the operational command codes for that device is sent over to the network connected device 10. The NetCTL protocol includes several formats for replies to the command request. The format that is used is dictated by the capabilities of both the remote control device 4 and the network connected device 10. In the case of a first format, the network connected device replies to the request with the command codes for the device accompanied by a text string. A second format enables the network connected device 10 to return its command codes accompanied by a graphic image. Another format enables the selected device to return its command codes accompanied by a text string and graphic image combination to the remote control device 4.

By way of example, three allowable formats, which are described in more detail below, are summarized in this chart for hypothetical responses from a selected VCR:

| First Format code | Accompanying Text String |
|---|---|
| 000 | "Stop" |
| 001 | "Play" |
| 010 | "Fast Forward" |
| 011 | "Reverse" |
| 100 | "Record" |
| 101 | "Pause" |

| Second Format code | Accompanying graphic |
|---|---|
| 000 | □ |
| 001 | 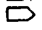 |
| 010 | 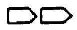 |
| 011 | 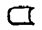 |
| 100 | ○ |
| 101 | = |

| Third Format code | | text and graphic |
|---|---|---|
| 000 | □ | "Stop" |
| 001 | 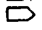 | "Play" |
| 010 011 | 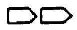 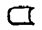 | "Fast Forward" "Reverse" |
| 100 | ○ | "Record" |
| 101 | = | "Pause" |

In the event the first format is used, the text string is shown on the touch screen display surface 28. In the event the second format is used, the graphical image is shown on the touch screen display surface 28. In the event the third format is used, both the text string and the graphical image are shown on the display surface 28. If a format is requested by the remote control device 4 that the network connected device 10 cannot satisfy ( i.e. a request to a network connected device to send an image graphic when the network connected device has only text messages, or a request for a JPEG type image when the network connected device has only GIF images ), an error message is returned to the remote control device, and the remote control device subsequently requests another format that both devices can utilize. Each command listed on the touch screen display surface 28 is associated with one of the buttons 30 of the remote control device 4. The user clicks on a button 30 associated with an operational command, and the command code is sent back to the network connected device. Upon receiving the command code, the network connected device 10 attempts to execute the command and returns an acknowledgment of success or an error message to the remote control device 4.

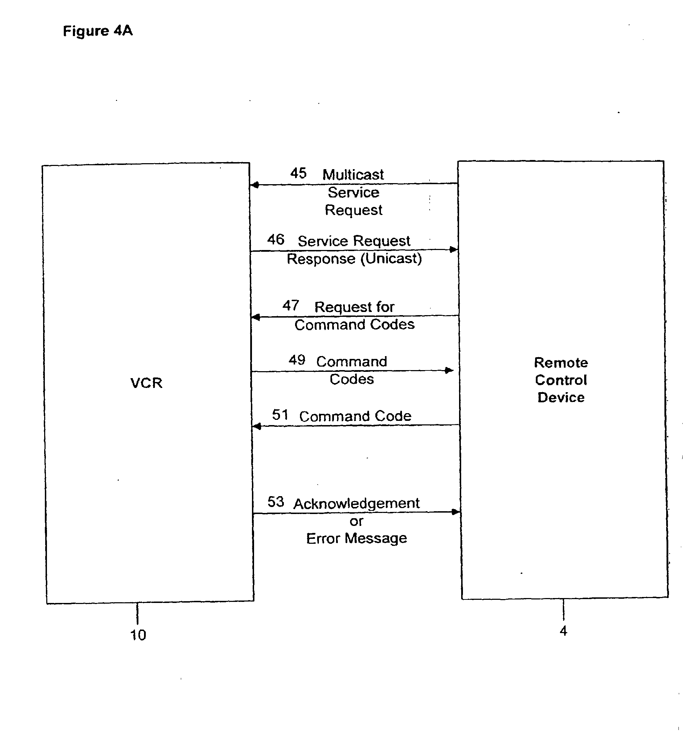

Figure 4A depicts the exchange of messages between a remote control device 4 and a network attached device 10, a VCR. These two devices 4 and 10 are attached to a network which does not have a SLP Directory Agent. Since there is no Directory Agent, the multicast registration request sent out by the Service Agent for the VCR goes unanswered. With no Directory Agent, the Service Agent for the VCR 10 will listen to the network for service requests matching the services and attributes of the VCR. The User Agent for the remote control device 4 sends out a multicast request for Directory Agents. Upon getting no response, the User Agent will multicast a service request for the type of service the remote requires 45. The Service Agent for each device matching the requested service will unicast a response 46 back to the remote control device 4. Subsequently, the user of the remote control device 4 sees a list displayed on the display surface 28 of all of the available identified devices. In one embodiment of the present invention, the list includes the text string name that accompanied the URL of the network attached device in the registration multicast 45. The user of the remote control device 4 selects the VCR 10 by depressing the button ( physical or virtual ) 30 that corresponds to the VCR 10. The remote control device 4 sends a request 47 to the VCR 10 for the command codes of the VCR. Upon receipt of the command request, the VCR 10 sends a copy of its command codes 49 to the remote control device 4 via the network 2. The remote control device 4 displays the available commands on its display surface 28, and the user selects a command by depressing the associated button 30. The selection results in a command code 51 being sent to the VCR 10. The VCR 10 attempts to perform the command and sends either an acknowledgement or an error message 53 to the remote control device 4. Upon receipt of the acknowledgement or error message 53, the remote control device 4 waits for further selections by the user.

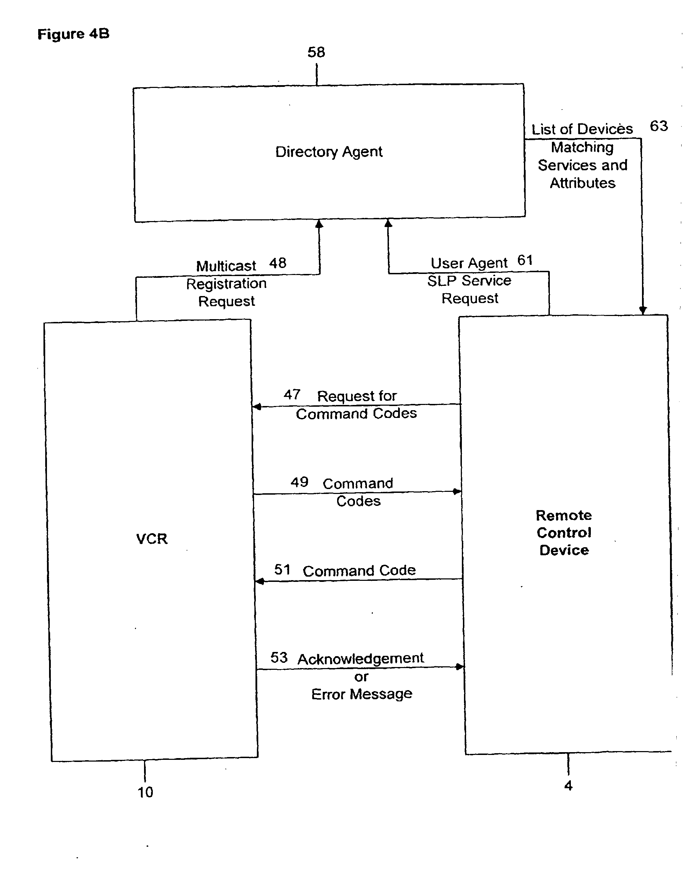

Figure 4B depicts the sequence of messages exchanged between a network attached device 10, a VCR, and a remote control device 4 that are utilizing the present invention on an IP based network which includes an SLP Directory Agent 58 to process SLP device registrations. The VCR 10, sends out a registration multicast request 48, utilizing the SLP protocol, to advertise its presence on the network. The registration multicast 45 is received by the Directory Agent 58 for the network 2 ( Figure 1). The Directory Agent 58 stores all of the registrations of the different network attached devices 10 as they occur. The User Agent for the remote control device 4 multicasts a request to identify available Directory Agents. The individual Directory Agents respond with identifying information. Subsequently, a user of the remote control device 4 selects an attribute descriptive of the type of devices the user wishes to control. Such an attribute may be for example, "video". The User Agent SLP service request 61 is forwarded to a Directory Agent 58 for processing. The SLP Directory Agent 58 responds to the request 61 by sending a list of all the devices matching the attribute class 63 back to the remote control device 4. The list matching the video attribute might be for instance "TV" and "VCR". The text string names are accompanied by the URLs of network attached devices. The user of the remote control device 4 selects a,device to control from the list of those displayed 31, in this case the VCR 10. A request for command codes 47 is sent to the VCR 10. Upon receipt of the command code request 47, the VCR 10 sends a copy of its command codes 49 to the remote control device 4 via the network 2. The remote control device 4 displays the available commands on its display surface 28 and the user selects one by depressing a button 30. The selection sends the selected command code 51 to the VCR 10. The VCR 10 attempts to perform the command and then sends either an acknowledgement of successful operation performance or an error message 53 to the remote control device 4. Upon receipt of the acknowledgement or error message 53, the remote control device 4 waits for further selections by the user. Those skilled in the art will recognize that there can be countless sequences of different message exchanges within the scope of the present invention and the above examples are offered only for the purpose of illustration and are not meant to be a restrictive list of the possible exchanges.

The present invention dictates the form of the conversation between the remote control device 4 and the network connected devices 10 executing the protocol. The protocol works on a request-response model, where the remote control device 4 executes the client side of the protocol and initiates the requests, and the network connected device 10 executes the server side of the protocol and initiates the responses. The format of the most common exchanges is outlined immediately below and described in detail further below:

| Client Side of NetCTL Protocol | | Server Side of NetCTL Protocol |
|---|---|---|
| Remote control device | | Network connected device |
| Hello(Remote ID) | → | |
| | ← | ACK, Session Key(Key),Top Menu Code |
| List Commands(Key, Menu Code) | → | |
| | ← | ACK, List of Command Codes w/Text |
| Do Command(Key, Cmd Code) | → | |
| | ← | ACK,Status String, Prompt, New Menu Code |
| Goodbye(Key) | → | |
| | ← | ACK |

| Utility Functions | | |
|---|---|---|
| Get Image(Key, Cmd Code, Pref Type) | → | |
| | ← | ACK, type, Image Bits, GridBag Info |
| Get Text(Key, Cmd Code) | → | |
| | ← | ACK, Text |
| Get Layout Help(Key, Menu Code) | → | |
| | ← | ACK, Grid Layout Info |

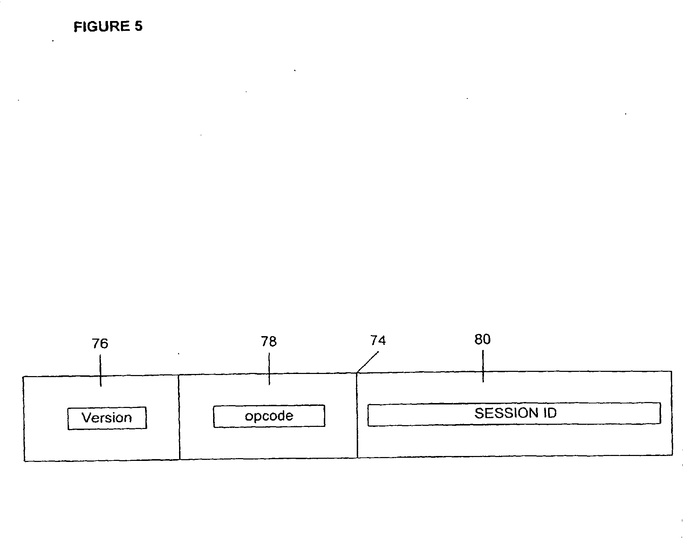

The present invention uses a frame format for messages between the remote control device 4 and the network connected device 10. Figure 5 depicts the format of the message header 74 used in the present invention for all of the remote control device's requests. The header 74 includes a version code field 76 set to the version number of the protocol, an Operations Code field 78 set to the number representing the operation currently being performed, and a Session ID field 80 set to the identifier number established for messages between the remote control device and the network connected device during the initial contact between the two devices. The Session ID field 80 is set to 0 if the request is the initial "Hello" request of the present invention. Those skilled in the art will recognize that the size of the fields in the frame format may be adjusted in different versions of the protocol without departing from the scope of the present invention.

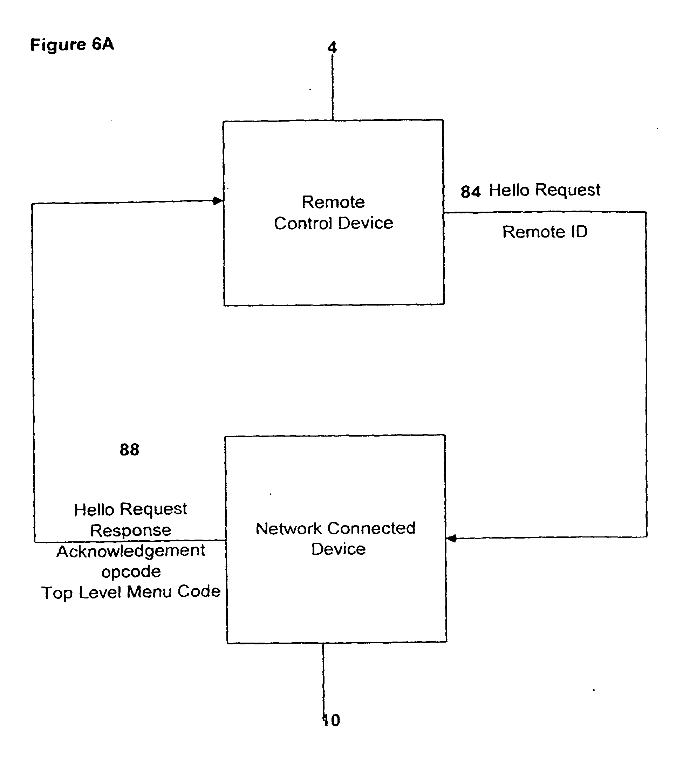

Once a user of the remote control device 4 indicates a desire to control a registered network connected device 10 by depressing the appropriate button 30, the remote control device attempts to make contact with the selected network connected device as depicted in Figure 6A. Contact is initiated in the illustrative embodiment by the electronic remote control 4 device sending a "Hello" request ( step 84 ) to the selected network connected device 10. The "Hello" request ( step 84 ) contains an identifier for the remote control device 4 so that the selected network connected device 10 can respond directly to the remote control device. The network connected device 10 sends a response ( step 88 ) if the device is available, which includes an acknowledgement, a Session Key and the top level menu code to the remote control device 4. The session key is included in any future messages between the two devices. The Top Level Menu Code is included to allow the remote control device 4 to access the menu of command codes of the network connected device 10.

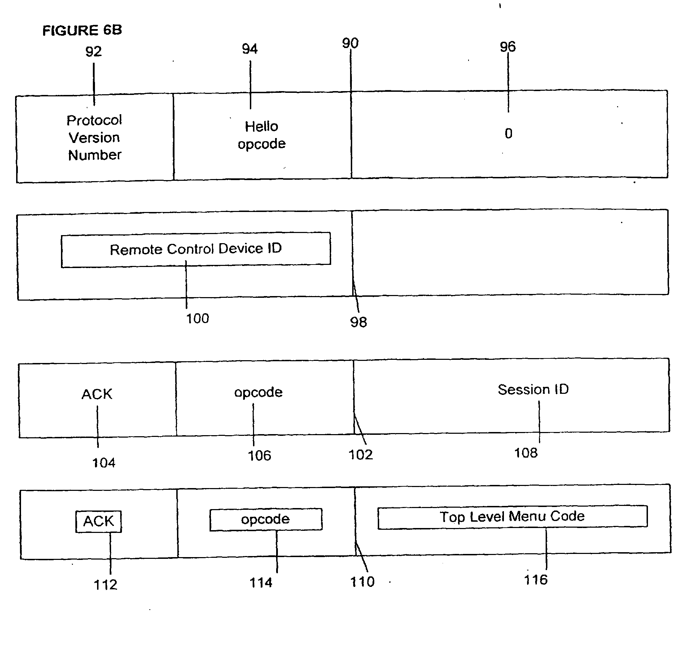

The frame format used by the remote control device 4 and the network connected device 10 in the "Hello" request and response is depicted in Figure 6B. The header 90 used in the "Hello" request includes the protocol version number 92, the "Hello" operations code ("opcode") as defined in the protocol 94, and the number "0" in the Session ID field 96 since a message session with the network connected device 10 has not been established. The body of the message 98 includes the electronic remote control ID in the a two byte field 100. The "Hello" response format includes its own header 102 which includes an Acknowledgement field 104, the "Hello" response opcode 106, and a session ID 108 established by the network connected device which serves as a reference number for further messages between the remote control device 4 and the network connected device 10. The body of the response message 110 includes an acknowledgement field 112, the Hello Response Opcode field 114 and a Top Level Menu Code field 116. The Top Level Menu Code 116 identifies the menu holding the list of commands for the selected network connected device 10.

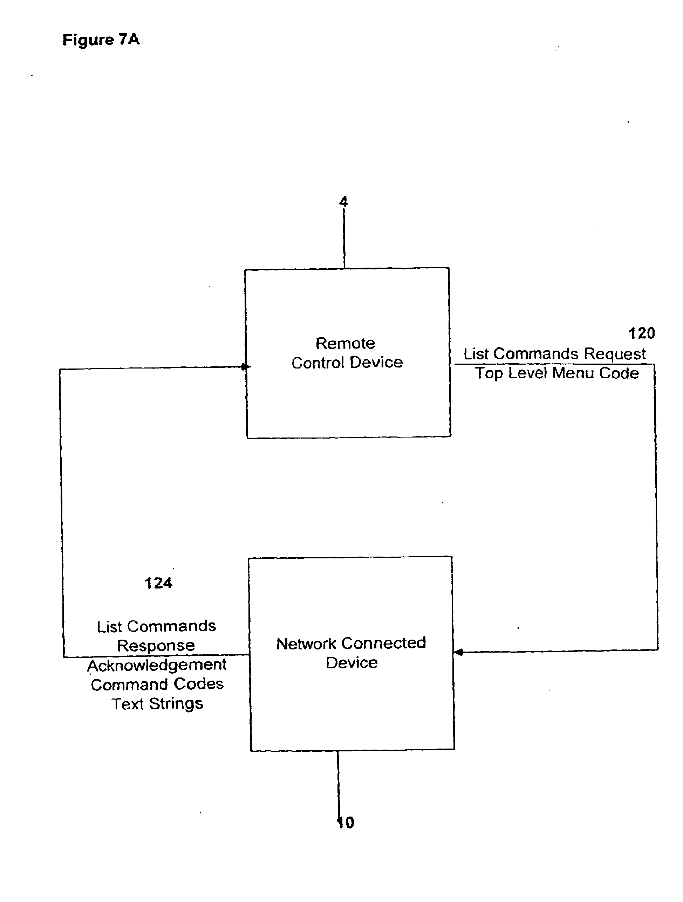

Figure 7A depicts the steps by which the remote control device 4 requests and receives the network connected device's commands and command codes. The remote control device 4 sends a List Commands request ( step 120 ) to the network connected device 10. The List Commands request ( step 120 ) includes the Top Level Menu Code the remote control device 4 had previously received from the network connected device 10. The network connected device 10 sends a response ( step 124 ), which includes an acknowledgement, a list of command codes and a list of text strings representing the names of the available commands, to the remote control device 4.

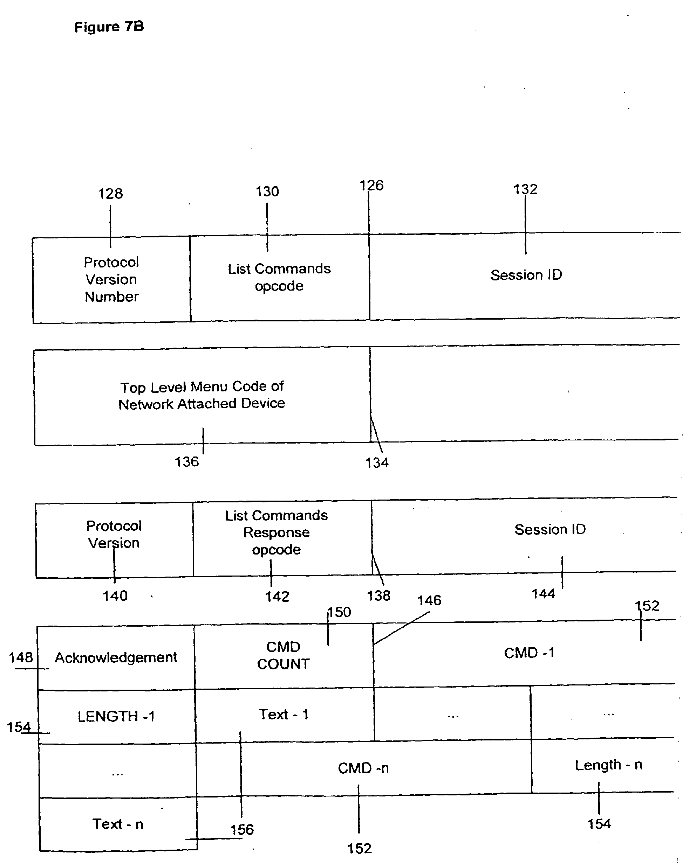

The frame format used by the remote control device 4 and the network connected device 10 in the List Commands request and response is depicted in Figure 7B. The List Commands request header 126 includes fields for the protocol version number 128, the List Commands opcode 130, and the session ID 132 assigned by the network connected device 10 in its response to the "Hello" request. The message body 134 includes the Top Level Menu code 136 of the network connected device 10. The List Commands response header 138 includes separate fields for the protocol version 140, the List Commands Response opcode 142, and the Session ID 144. The body of the List Commands response message 146 includes separate fields for the Acknowledgement 148, the Command Count 150 indicating the number of commands being sent, and three fields for each command, the actual command 152, the length of text string field 154 indicating the length of the following field, and the text string field 156 holding the actual name of the command. The three fields are repeated from 1 to n times, with n being the number of commands sent and equal to the number in the Command Count field 150. The text strings representing the names of device commands are displayed on the remote control device 4 display surface 28.

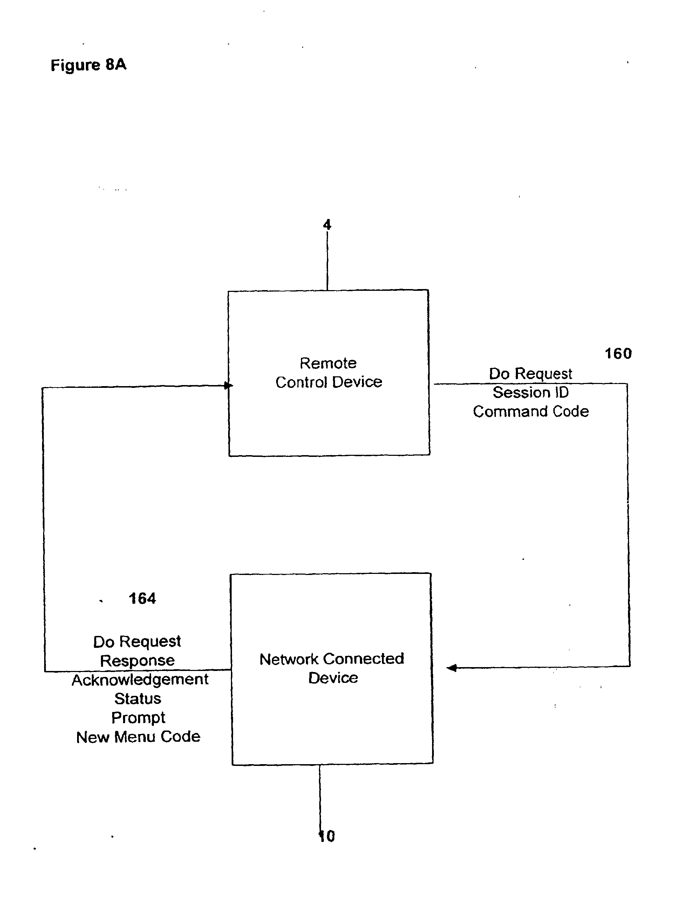

Figure 8A depicts the steps by which the remote control device 4 requests the network connected device 10 perform a certain operation. The remote control device 4 sends a Do request ( step 160 ) to the network connected device 10. The Do request ( step 160 ) includes the Session ID and one of the network connected device's command codes which the remote control device 4 previously received in the network connected device's List Command response 124. The network connected device's response ( step 164 ) includes an acknowledgement field and may include fields for the status of the network connected device 10 if the network connected device is configured to update its status upon request, and for a prompt message to the user if the operation requires it. The network connected device's response ( step 164) also includes a new menu code for the network connected device 10, which is the next menu to present to the user.

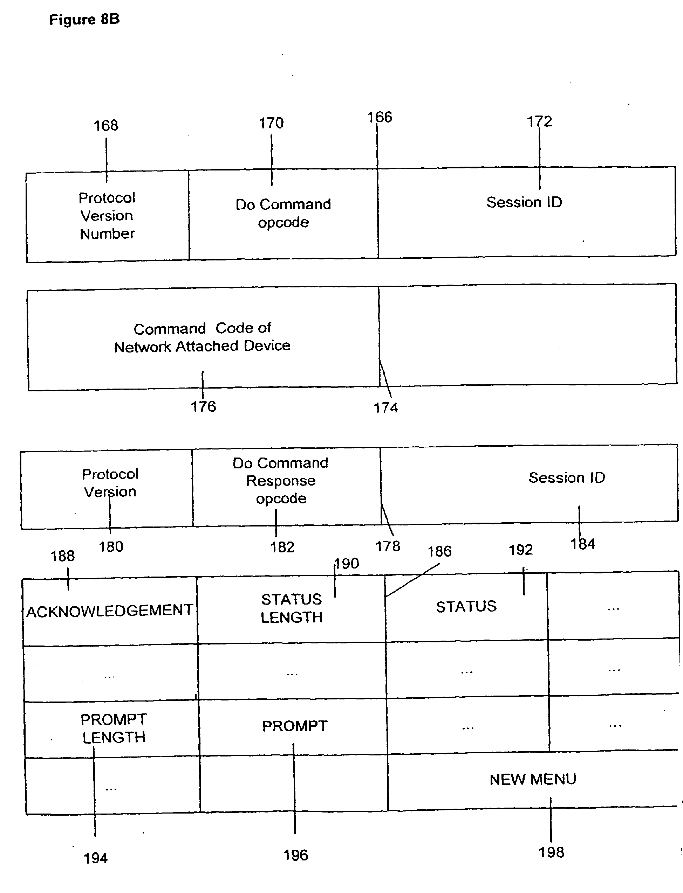

The frame format used by the remote control device 4 and the network connected device 10 in the Do Command request and response is depicted in Figure 8B. The Do Command request header 166 includes fields for the protocol version number 168, the Do Commands Opcode 170, and the Session ID 172. The message body of the Do command 174 includes a command code for the network connected device 10. The Do response header 178 includes the protocol version header 180, the Do command response code 182 and the Session ID 184. The message body 186 includes an acknowledgement field 188, and a status length field 190 which indicates the length of the following status field 192. The status field contains bits describing the condition of the network connected device 10. The message body 186 also includes a prompt length field 194 which indicates the length of the following Prompt field 196. Some operations require further input from the user of the remote control device 4, and the prompt field is used to send a text message back to the user from the network connected device 10. The Do response message format also includes a new menu code 198 which provides a different menu for the network connected device 10. Those skilled in the art will recognize that both the status length field 190 and the prompt length field 194 may in some circumstances be set to 0 and the corresponding Status 192 and Prompt 196 fields may be empty. The Status field will be empty if the network connected device 10 does not provide updated device information to the remote control device 4. The Prompt field 196 will be empty if the network connected device 10 is able to complete the operation requested in the Do request 160 without further information from the user of the remote electronic control device 4.

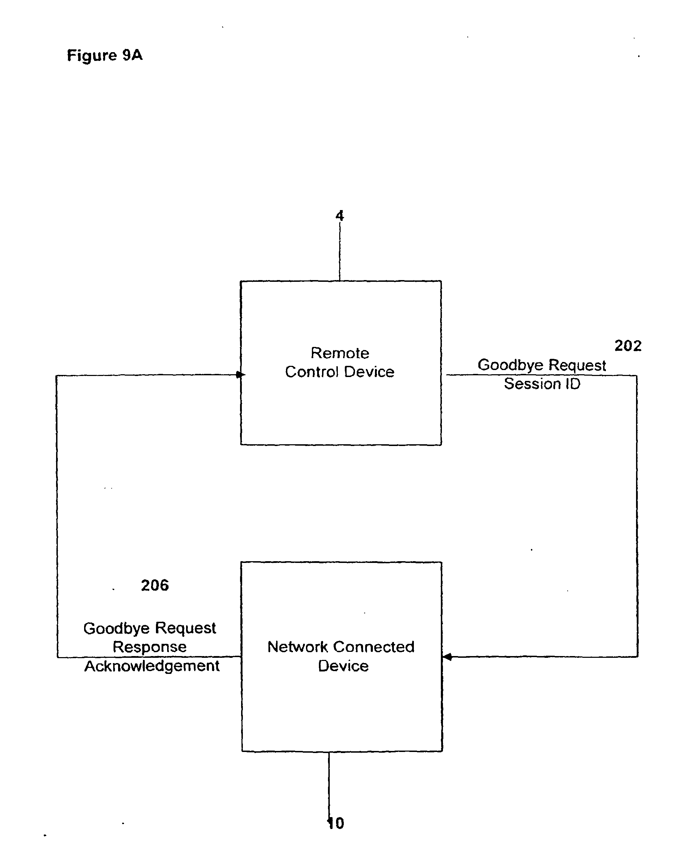

Figure 9A depicts the steps by which the remote control device requests the network connected device 10 terminate the message session. The remote control device 4 sends a Goodbye request ( step 202 ) to the network connected device 10. The Goodbye request ( step 202 ) includes the Session ID. The network connected device's response ( step 206 ) includes an acknowledgement.

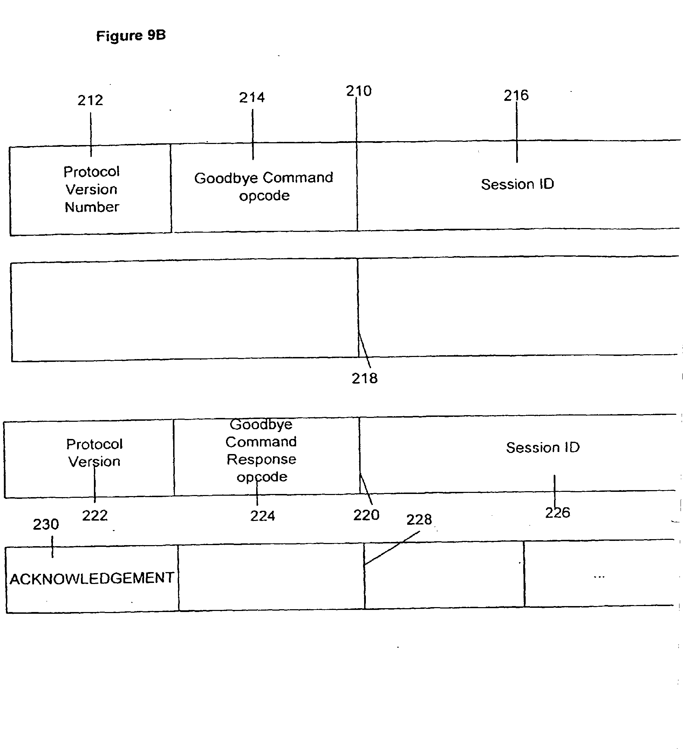

The frame format used by the remote control device 4 and the network connected device 10 in the Goodbye Command request and response is depicted in Figure 9B. The Goodbye Command request header 210 includes fields for the protocol version number 212, the Goodbye Commands Opcode 214, and the Session ID 216. The message body of the Goodbye command 218 is empty. The Goodbye response header 220 includes the protocol version field 222, the Goodbye Command response code field 224 and the Session ID field 226. The message body 228 includes an acknowledgement field 230.

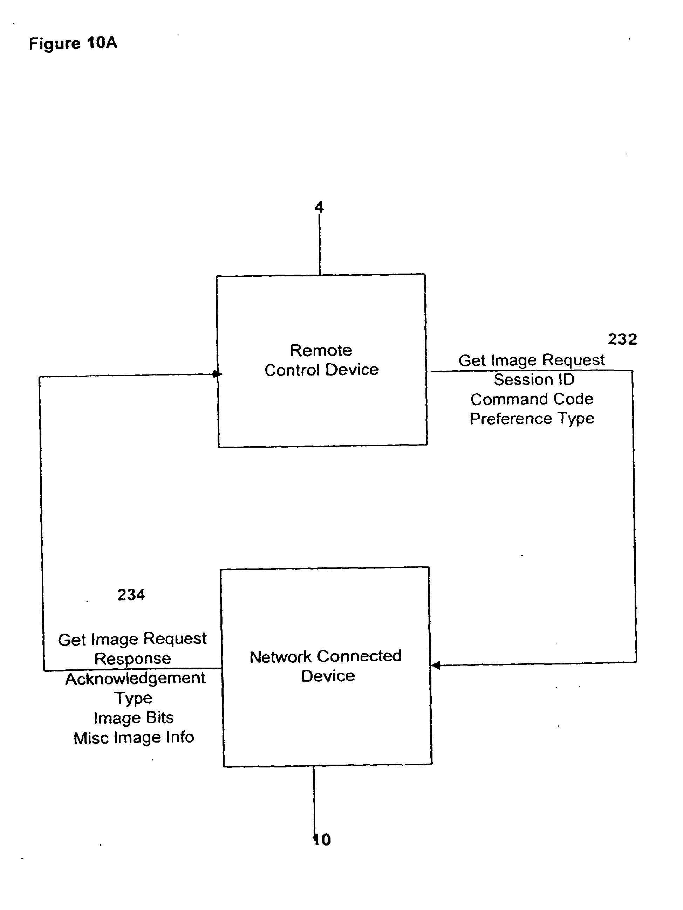

The illustrated embodiment also includes utility functions that allow the remote control device 4 to obtain additional information about a device's preferred control pad layout and additional button image information. If the user of the remote control device 4 wishes to have images to display instead of text, the remote control device can query the network connected device 10 for them directly by sending the Get Image opcode. Figure 10A depicts the steps by which the remote control device 4 requests the network connected device 10 send image data. The remote control device 4 sends a Get Image request ( step 232 ) to the network connected device 10. The Get Image request ( step 232 ) includes the Session ID, the Command Code for providing the data, and a Preference Type listing the particular type of image requested ( i.e.: JPEG, GIF , BMP, etc. ). The network connected device's response ( step 234 ) includes an acknowledgement or error message, an indication of the type of image being sent, the image bits themselves, and miscellaneous information associated with the image).

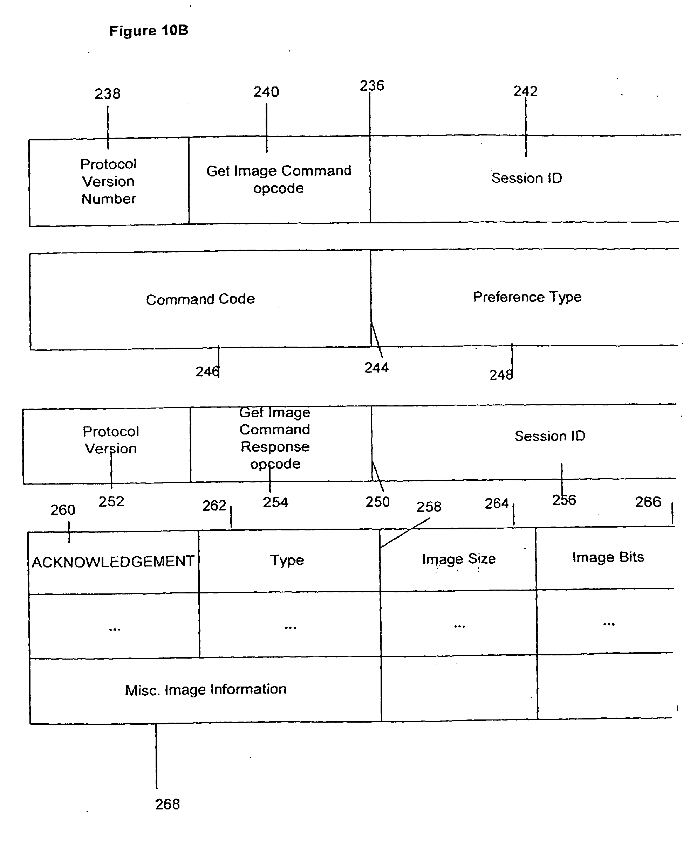

The frame format used by the remote control device 4 and the network connected device 10 in the Get Image Command request and response is depicted in Figure 10B. The Get Image Command request header 236 includes fields for the protocol version number 238, the Get Image Commands Opcode 240, and the Session ID 242. The message body of the Get Image command 244 includes fields for a command code 246, and a preference type 248. The Get Image response header 250 includes fields for the protocol version header 252, the Get Image Command response code 254 and the Session ID 256. The message body 258 includes fields for an acknowledgement 260, type (JPEG, GIF, BMP, etc. ) 262, image size 264, listing the image size in bytes, image bits 266, the image bits themselves, and a miscellaneous image information field 268.

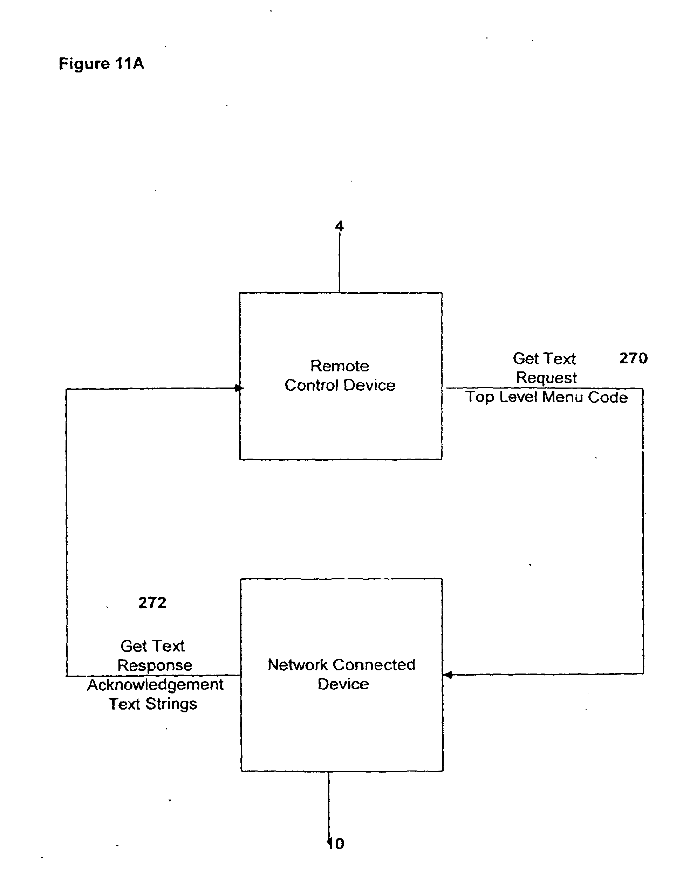

Figure 11A depicts the steps by which the remote control device 4 requests the network connected device 10 send text data. The remote control device 4 sends a Get Text request ( step 270 ) to the network connected device 10. The Get Text request ( step 270 ) includes the Session ID and the appropriate Command Code. The network connected device's response ( step 272 ) includes an acknowledgement and the requested text.

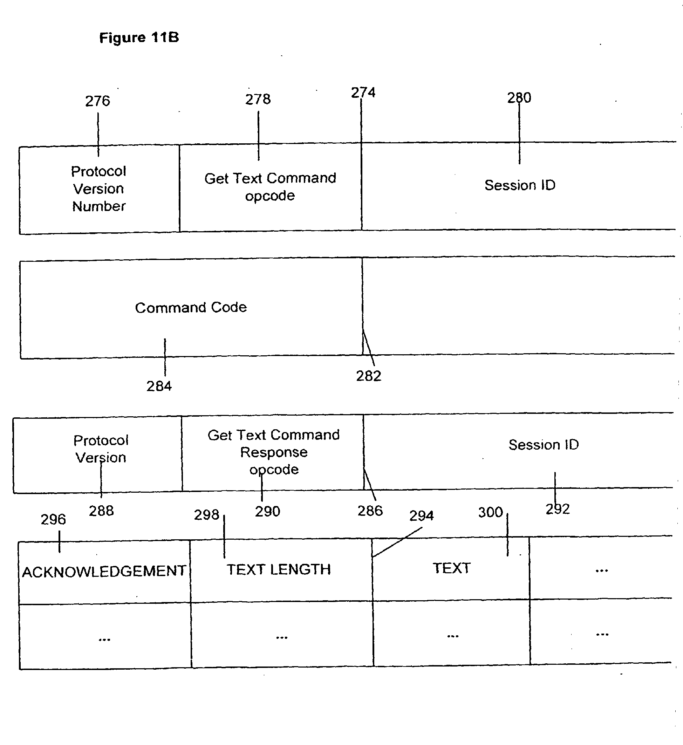

The frame format used by the remote control device 4 and the network connected device 10 in the Get Text Command request and response is depicted in Figure 11B. The Get Text Command request header 274 includes fields for the protocol version number 276, the Get Text Commands Opcode 278, and the Session ID 280. The message body of the Get Text command 282 includes a field for the appropriate command code 284. The Get Text response header 286 includes fields for the protocol version header 288, the Get Text Command response code 290 and the Session ID 292. The message body 294 includes fields for an acknowledgement 296, text length 298, which indicates the length of the upcoming text field 300, which holds the actual text bits.

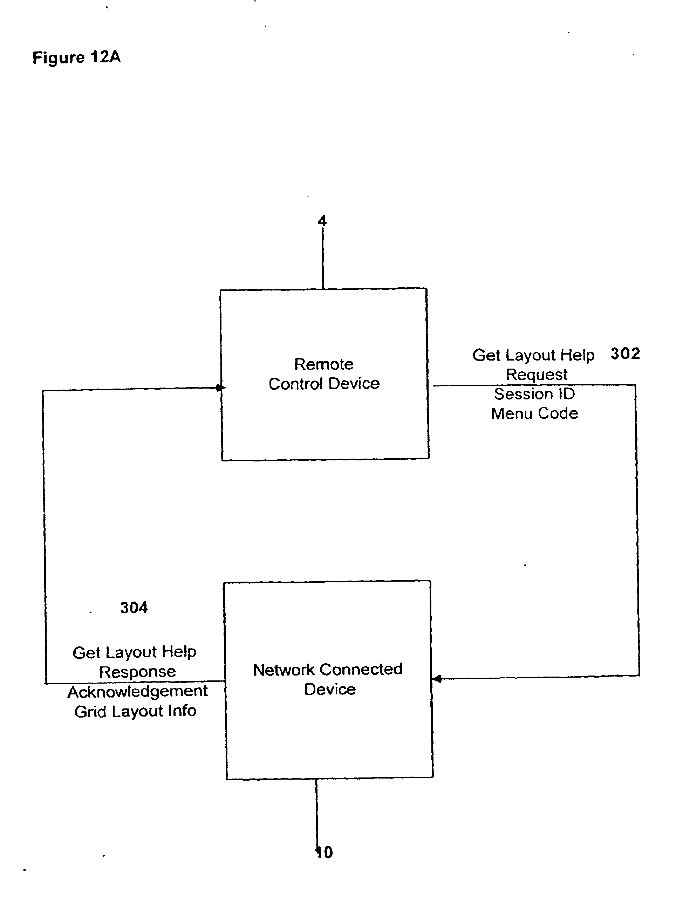

Figure 12A depicts the steps by which the remote control device 4 requests the network connected device 10 send grid layout information for the display surface 28. The remote control device 4 sends a Get Layout Help request ( step 302 ) to the network connected device 10. The Get Layout Help request ( step 304 ) includes the Session ID and the appropriate Menu Code. The network connected device's response ( step 304 ) includes an acknowledgement and the grid layout information.

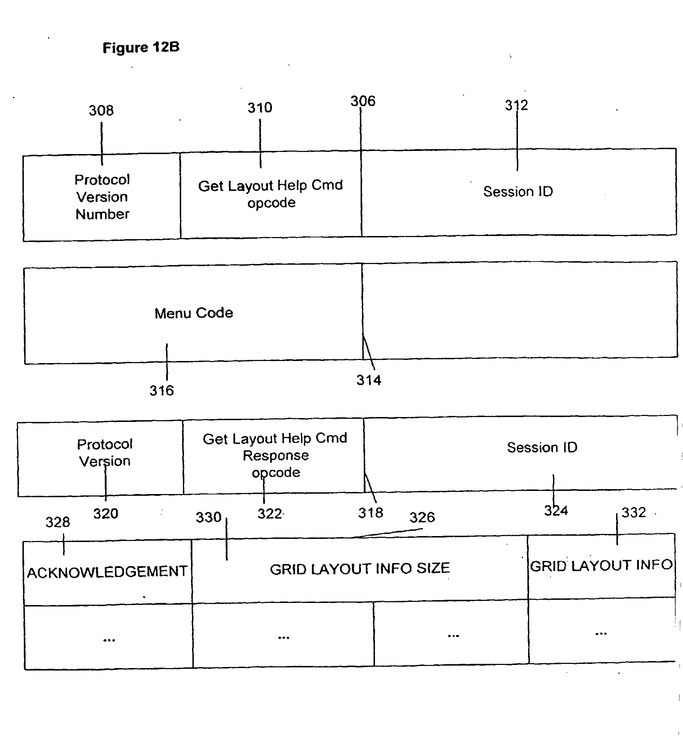

The frame format used by the remote control device 4 and the network connected device 10 in the Get Layout Help Command request and response is depicted in Figure 12B. The Get Layout Help Command request header 306 includes fields for the protocol version number 308, the Get Layout Help Command Opcode 310, and the Session ID 312. The message body of the Get Layout Help command 314 includes a field for the menu code 316 for the commands for which the layout help is sought. The Get Layout Help response header 318 includes fields for the protocol version header 320, the Get Layout Help Command response code 322 and the Session ID 324. The message body 326 includes fields for an acknowledgement 328, grid layout information size 330, which indicates the length of the upcoming grid layout information field 332, which holds the actual grid layout information. The remote control device 4 uses this information to arrange the information shown on its display surface 28.

It will thus be seen that the invention efficiently attains the objects made apparent from the preceding description. Since certain changes may be made without departing from the scope of the present invention, it is intended that all matter contained in the above description or shown in the accompanying drawings be interpreted as illustrative and not in a literal sense. Practitioners of the art will realize that the separate requests and responses illustrated herein may have fields added or deleted from the request or response and additional requests and responses may be added from one protocol version to the next.

## Claims

1. A remote control device apparatus (4) comprising a memory, a processing unit and a display surface (28), for controlling network connected devices (10), and
**characterized by**:
a wireless network interface (34), and
being arranged to execute computer-executable instructions for a network protocol in order to facilitate the dynamic location, identification and control of a plurality of network connected devices (10) through a series of response and request transmissions involving said remote control device apparatus (4).

2. The apparatus of claim 1 wherein said remote control device apparatus (4) is arranged for being located in a car (2).

3. The apparatus of claim 1 or claim 2 wherein said remote control device apparatus (4) includes means for communicating with the said network connected devices (10) over an internet protocol based network (2).

4. The apparatus of any preceding claim wherein said wireless network interface (34) is a local area network interface.

5. The apparatus of any preceding claim wherein said remote control device apparatus (4) includes means for dynamically locating and identifying available network connected devices (10) by sending out a request on said network for available devices to identify themselves to the remote control device (4) and receiving a response message which contains a device location and a device name for each available network connected device (10).

6. The apparatus of claim 5 wherein said remote control device apparatus (4) includes means for displaying on said display surface (28) the name(s) of available network connected device(s) (27).

7. The apparatus of claim 5 or claim 6 wherein said remote control device apparatus (4) includes means for sending a request for command codes over the network (2) to an available network connected device (10) and receiving a list of command codes from said available network connected device (10).

8. The apparatus of claim 7 wherein said remote control device apparatus (4) includes means for displaying a list of commands for said network connected device (10) on said display surface (28), each said command displayed on said display surface (28) corresponding to one of a plurality of buttons (30) on said remote control (4), and each said button (30) corresponding to a command code for said network connected device (10).

9. The apparatus of claim 8 wherein said remote control device apparatus (4) includes depressible buttons (30) corresponding to one of said commands displayed on said display surface (28), the depressing of which causes a command code corresponding to said displayed command to be sent over the network (2) to said network connected device (10), and said network connected device (10) to perform the operation called for by said command code.

10. The apparatus of claim 1 or claim 2 wherein said remote control device apparatus (4) includes buttons (30) corresponding to user choices depicted on said display surface (28).

11. The apparatus of claim 10 wherein said buttons (30) are physical buttons (30) capable of being depressed by a user of said remote control device (4).

12. The apparatus of claim 10 wherein said buttons (30) are a graphical user interface (30) that emulates basic keypad functions.

13. The apparatus of claim 10 wherein said buttons (30) are a keyboard and mouse driven interface that emulates basic keypad functions.

14. The apparatus of claim 10 wherein said buttons (30) are a touch screen interface that emulates basic keypad functions.

## Patentansprüche

1. Fernsteuergerätvorrichtung (4), umfassend einen Speicher, einen Prozessor und eine Anzeigefläche (28), zum Steuern von ans Netz angeschlossenen Geräten (10), und **gekennzeichnet durch**:
eine Funknetzschnittstelle (34),
und derart ausgelegt, dass sie von einem Computer ausführbare Anweisungen für ein Netzprotokoll ausführt, um **dadurch** die dynamische Auffindung, Identifikation und Steuerung einer Vielzahl von ans Netz angeschlossenen Geräten (10) mittels einer Reihe von Antwort- und Anfrage- bzw. Aufforderungsübertragungen, an denen die Fernsteuergerätvorrichtung (4) beteiligt ist, zu erleichtern.

2. Vorrichtung nach Anspruch 1, **dadurch gekennzeichnet, dass** die Fernsteuergerätvorrichtung (4) zur Anordnung in einem Kraftwagen (2) ausgelegt ist.

3. Vorrichtung nach Anspruch 1 oder 2, **dadurch gekennzeichnet, dass** die Fernsteuergerätvorrichtung (4) Mittel zur Kommunikation mit den an das Netz angeschlossenen Geräten (10) über ein intemetprotokollbasiertes Netz (2) aufweist.

4. Vorrichtung nach einem der voranstehenden Ansprüche, **dadurch gekennzeichnet, dass** es sich bei der Funknetzschnittstelle (34) um eine LAN-Schnittstelle handelt.

5. Vorrichtung nach einem der voranstehenden Ansprüche, **dadurch gekennzeichnet, dass** die Fernsteuergerätvorrichtung (4) Mittel zum dynamischen Auffinden und Identifizieren verfügbarer, ans Netz angeschlossener Geräte (10) aufweist, indem diese im Netz an verfügbare Geräte eine Aufforderung aussenden, sich der Fernsteuervorrichtung (4) gegenüber zu identifizieren, und eine Antwortnachricht empfangen, die eine Gerätestandortangabe und einen Gerätenamen für jedes verfügbare, ans Netz angeschlossene Gerät (10) enthält.

6. Vorrichtung nach Anspruch 5, **dadurch gekennzeichnet, dass** die Fernsteuergerätvorrichtung (4) Mittel zur Anzeige des Namens eines oder mehrerer verfügbarer, ans Netz angeschlossener Geräte auf der Anzeigefläche (28) aufweist.

7. Vorrichtung nach Anspruch 5 oder 6, **dadurch gekennzeichnet, dass** die Fernsteuergerätvorrichtung (4) Mittel zum Senden einer Anfrage nach Befehlscodes über das Netz (2) an ein verfügbares, ans Netz angeschlossenes Gerät (10) und zum Empfangen einer Liste von Befehlscodes von dem verfügbaren, an das Netz angeschlossenen Gerät (10) aufweist.

8. Vorrichtung nach Anspruch 7, **dadurch gekennzeichnet, dass** die Fernsteuergerätvorrichtung (4) Mittel zur Anzeige einer Liste von Befehlen für das ans Netz angeschlossene Gerät (10) auf der Anzeigefläche (28) aufweist, wobei jeder auf der Anzeigefläche (28) angezeigte Befehl einem Knopf einer Vielzahl von Knöpfen (30) auf der Femsteuerung (4) entspricht, und jeder Knopf (30) einem Befehlscode für das ans Netz angeschlossene Gerät (10) entspricht.

9. Vorrichtung nach Anspruch 8, **dadurch gekennzeichnet, dass** die Fernsteuergerätvorrichtung (4) drückbare Knöpfe (30) aufweist, die einem der Befehle entsprechen, die auf der Anzeigefläche (28) angezeigt werden, wobei durch das Drücken des Knopfes ein Befehlscode entsprechend dem angezeigten Befehl über das Netz (2) an das ans Netz angeschlossene Gerät (10) gesendet wird, und das ans Netz angeschlossene Gerät (10) dann den vom Befehlscode geforderten Vorgang ausführt.

10. Vorrichtung nach Anspruch 1 oder Anspruch 2, **dadurch gekennzeichnet, dass** die Fernsteuergerätvorrichtung (4) Knöpfe (30) aufweist, die auf der Anzeigefläche (28) dargestellten Wahlentscheidungen des Benutzers entsprechen.

11. Vorrichtung nach Anspruch 10, **dadurch gekennzeichnet, dass** die Knöpfe (30) reale Knöpfe (30) sind, die von einem Benutzer des Fernsteuergeräts (4) gedrückt werden können.

12. Vorrichtung nach Anspruch 10, **dadurch gekennzeichnet, dass** es sich bei den Knöpfen (30) um eine graphische Benutzeroberfläche (30) handelt, die grundlegende Tastenfeldfunktionen emuliert.

13. Vorrichtung nach Anspruch 10, **dadurch gekennzeichnet, dass** es sich bei den Knöpfen (30) um eine über Tastatur und Maus betriebene Schnittstelle handelt, die grundlegende Tastenfeldfunktionen emuliert.

14. Vorrichtung nach Anspruch 10, **dadurch gekennzeichnet, dass** es sich bei den Knöpfen (30) um eine Touchscreen-Schnittstelle handelt, die grundlegende Tastenfeldfunktionen emuliert.

## Revendications

1. Appareil de télécommande (4) comprenant une mémoire, une unité de traitement et une surface d'affichage (28) pour commander des dispositifs reliés au réseau (10), et **caractérisé par** :
une interface réseau sans fil (34), et
agencé pour exécuter des instructions exécutables par ordinateur pour un protocole réseau afin de faciliter la localisation dynamique, l'identification et la commande de plusieurs dispositifs reliés au réseau (10) par une série de transmissions de demandes et réponses impliquant ledit appareil de télécommande (4).

2. Appareil selon la revendication 1 **caractérisé en ce que** ledit appareil de télécommande (4) est agencé pour être placé dans un véhicule (2).

3. Appareil selon la revendication 1 ou la revendication 2 **caractérisé en ce que** ledit appareil de télécommande (4) comporte un moyen pour communiquer avec lesdits dispositifs reliés au réseau (10) sur un réseau à base de protocole internet (2).

4. Appareil selon l'une des précédentes revendications **caractérisé en ce que** ladite interface réseau sans fil (34) est une interface réseau local.

5. Appareil selon l'une des précédentes revendications **caractérisé en ce que** ledit appareil de télécommande (4) comporte un moyen pour localiser dynamiquement et identifier des dispositifs reliés au réseau disponibles (10) en envoyant une demande sur ledit réseau pour que les dispositifs disponibles s'identifient eux-mêmes au dispositif de télécommande (4) et en recevant un message de réponse qui contient une localisation du dispositif et un nom de dispositif pour chaque dispositif disponible relié au réseau (10).

6. Appareil selon la revendication 5 **caractérisé en ce que** ledit appareil de télécommande (4) comporte un moyen pour afficher sur ladite surface d'affichage (28) le(s) nom(s) du ou des dispositifs disponibles reliés au réseau (27).

7. Appareil selon la revendication 5 ou la revendication 6 **caractérisé en ce que** ledit appareil de télécommande (4) comporte un moyen pour envoyer une demande pour les codes de commande sur le réseau (2) à un dispositif disponible relié au réseau (10) et pour recevoir une liste de codes de commande provenant dudit dispositif disponible relié au réseau (10).

8. Appareil selon la revendication 7 **caractérisé en ce que** ledit appareil de télécommande (4) comporte un moyen pour afficher une liste des commandes pour ledit dispositif relié au réseau (10) sur ladite surface d'affichage (28), chaque dite commande affichée sur ladite surface d'affichage (28) correspondant à l'un des divers boutons (30) sur ladite télécommande (4), et chaque dit bouton (30) correspondant à un code de commande pour ledit dispositif relié au réseau (10).

9. Appareil selon la revendication 8 **caractérisé en ce que** ledit appareil de télécommande (4) comporte des boutons enfonçables (30) correspondant à l'une desdites commandes affichées sur ladite surface d'affichage (28), dont l'enfoncement provoque l'envoi d'un code de commande correspondant à ladite commande affichée sur le réseau (2) audit dispositif relié au réseau (10), et l'exécution par ledit dispositif relié au réseau (10) de l'opération demandée par ledit code de commande.

10. Appareil selon la revendication 1 ou la revendication 2 **caractérisé en ce que** ledit appareil de télécommande (4) comporte des boutons (30) correspondant aux choix de l'utilisateur décrits sur ladite surface d'affichage (28).

11. Appareil selon la revendication 10 **caractérisé en ce que** lesdits boutons (30) sont des boutons physiques (30) qui peuvent être enfoncés par un utilisateur dudit dispositif de télécommande (4).

12. Appareil selon la revendication 10 **caractérisé en ce que** lesdits boutons (30) sont une interface utilisateur graphique (30) qui émule des fonctions de base du pavé numérique.

13. Appareil selon la revendication 10 **caractérisé en ce que** lesdits boutons (30) sont une interface commandée par souris et clavier qui émule les fonctions de base du pavé numérique.

14. Appareil selon la revendication 10 **caractérisé en ce que** lesdits boutons (30) sont une interface à écran tactile qui émule les fonctions de base du pavé numérique.
